# EUROPEAN PATENT SPECIFICATION

(11) **EP 1 222 537 B1**
(45) Date of publication and mention of the grant of the patent: **12.01.2005**
(21) Application number: 00961534.5
(22) Date of filing: 05.09.2000
(51) Int. Cl.: G06F 9/46

(54) **RESOURCE ACCESS CONTROL SYSTEM**
SYSTEM ZUR BETRIEBSMITTELZUGRIFFSTEUERUNG
SYSTEME DE CONTROLE D'ACCES A DES RESSOURCES

(30) Priority: 03.09.1999 US 152312 P
(43) Date of publication of application: 17.07.2002
(73) Proprietor: General Instrument Corporation, Horsham, Pennsylvania 19044 (US)
(72) Inventor: BRANSILAV, Meandzija, Del Mar, CA 92014 (US); MEDVINSKY, Alexander, San Diego, CA 92129 (US)
(74) Representative: Bohnenberger, Johannes, Dr.
(86) International application number: PCT/US2000/024290
(87) International publication number: WO 2001/018650

(56) References cited:
- WO-A-98/32073
- WO-A-99/30217
- US-A- 5 280 614
- US-A- 5 311 591
- US-A- 5 684 948
- GONG L ET AL: "Going beyond the sandbox: an overview of the new security architecture in the JavaDevelopment Kit 1.2" PROCEEDINGS OF THE USENIX SYMPOSIUM ON INTERNET TECHNOLOGIES AND SYSTEMS, 8 December 1997 (1997-12-08), pages 103-112, XP002100907
- N ISLAM ET AL: "A Flexible Security Model for Using Internet Content" IBM DEVELOPER LIBRARY, October 1997 (1997-10), XP002115800

## Description

This application derives priority from U.S. provisional patent application number 60/152,312, titled "Resource Access Control System," filed September 3, 1999, which is incorporated herein in its entirety.

### BACKGROUND OF THE INVENTION

The present invention relates in general to digital processing systems, and in particular to allocation of resources in a digital system.

Digital processing devices, such as computer systems, allow a user of the device to execute various software programs, objects, etc., in order to provide functionality. For example, a user may run a web browser, word processor and E-mail program on a computer system. Each of these software applications can be manufactured by a different software developer and be obtained, installed and operated independently. The user can run or remove software from the computer as desired. This approach allows a non-changing piece of hardware, *i*.*e*., the computer system, to perform many different tasks by executing software objects. Thus, the functionality of the computer system can be changed, or updated, as desired.

A problem arises in such an approach when the software applications, or objects, have to compete for resources. Limited resources in a computer system include random access memory (RAM), disk storage and network access or communication mechanisms for communicating with other devices. Traditionally, it has been the job of an operating system in a computer to handle allocation of resources. The main goal of an operating system is to provide each software object with as much allocation of resources as it needs on a timeshare basis. This approach makes it difficult for any manufacturer of software objects to control allocation among the objects executing in the processing device.

It becomes increasingly important to be able to regulate access to resources in a digital processing device as the overall size and amount of resources decreases. This is especially true in consumer-oriented embedded processing such as in a television receiving device or so-called "set-top box."

Thus, it is desirable to provide a resource access control system (RACS) for use in a processing device, such as a computer, set-top box or other device, that allows a very high degree of control over resource access and allocation. By allowing greater control over resource allocation, manufacturers of software objects can devise different revenue models for selling software functionality to an end user. For example, a software object can be provided at a low cost where it is restricted from certain resources (*e.g.*, a modem connection, access to a television tuner, hard disk storage, *etc.*). The same software object can be provided at a higher cost with a higher resource access level so that it provides greater functionality to the end user.

A resource access control system that provides detailed control over each software object's resource allocation can also be used to achieve a high level of security. Certain classes of objects can be restricted to using limited resources, thus ensuring that high priority, or high security, objects that use more or different resources are able to execute adequately and privately.

### SUMMARY OF THE INVENTION

The present invention provides a resource access control system that restricts access rights of individual software objects executing in a processing device. According to the present invention, the allocation of resources for a software object can be changed during execution of the software object.

Accordingly, in one embodiment the present invention provides a method of controlling resource access in a digital processing device, the method including: allocating a first set of resources to a software object in the digital processing device; and changing the allocation of resources to the software object during execution of the software object.

In another embodiment, the present invention provides a method of controlling resource access in a digital processing device, the method including: identifying a first set of resources in the digital processing device; associating a domain with the first set of resources; and allocating the first set of resources to a software object by associating the software object with the domain.

In another embodiment, the present invention provides a method of controlling resource access in a digital processing device, the method including: allocating a first set of resources to a software object in the digital processing device; and changing the allocation of resources to the software object to modify the functionality of the software object.

In another embodiment, a system for controlling resource access in a digital processing device includes: means for allocating a first set of resources to a software object in the digital processing device; and means for changing the allocation of resources to the software object during execution of the software object.

A better understanding of the nature and advantages of the present invention may be gained with reference to the following detailed description and the accompanying drawings.

### BRIEF DESCRIPTION OF THE DRAWINGS

Figure 1 is an example of some of the various security threads that might be present in a running system;
Figure 2 depicts an authorization stack for a security thread; and
Figure 3 is an illustration of authorization stacks of the present invention.

### DETAILED DESCRIPTION OF THE SPECIFIC EMBODIMENTS

The present invention provides a resource access control system that restricts access rights of individual software objects executing in a processing device. A cable or satellite set-top box, or any other computer host, will in general include different types of software objects, i.e. system programs, interpreters, applications, applets, scripts, etc. Software objects require access to resources to fulfill their function, *i*.*e*., they need a physical/software resource such as a modem to communicate, a tuner to tune into a TV channel, a file to save data, *etc.* Therefore, a given software object may require some type of access to a given type of resource object. It should be noted that the set of resource objects includes the set of software objects. In other words, a given software object may require access to another software obj ect.

Different software objects may have different resource needs, may originate from different code sources or may run on behalf of different set-top users. In all of these cases it is necessary to restrict the access rights of the software object; *e.g.*, not all software objects may be entrusted with the use of a modem or the read/write of a password file. Each software object should have access rights for a subset of resource objects if it is authorized to access those resources. The RACS is responsible for enforcing the limitations on resource access that are placed on each software object.

A fundamental concept and important building block of the RACS is the protection domain. A domain can be scoped by the set of resource objects that are currently directly accessible by a software object, and operations that are permitted on those resources. A software object is an entity to which permissions (and as a result, accountability) are granted.

Java security architecture employs a similar concept to that of the protection domains used to restrict downloaded objects to access only the resources for which they had been authorized. This is an example of a static protection domain, where the resources for which a particular object is authorized do not change over time.

The RACS can also include dynamic protection domains. The inclusion of a dynamic protection domain means that the resources for which an object is authorized do change over time, even while the object is running. In particular, dynamic protection domains are used as tools for conditional access. The consumer may download a software object with some of its functionality disabled via a resource control. Later, the same consumer may pay for additional functionality within the same software object. This is achieved by changing the resource control on the software object so that the software object can access (i.e., is now authorized for) an expanded list of resources.

Although the RACS is most easily implemented inside an object-oriented environment such as Java, the RACS architecture and its implementation described in this document applies to any software environment. For example, a software environment may consist of native applications written in C or C^{++,} interpreted Java applications running inside a Java virtual machine (JVM), and HTML scripts and Java applets running inside a browser.

In one embodiment, a protection domain is associated with a group of objects. Each object will contain a security group identification (ID) that associates the object with a particular protection domain. All objects with the same security group ID will be authorized for an identical set of resources. It is possible for a protection domain to contain exactly one object.

It is further possible for a system to include software objects that are authorized for all of the resources on that host. That does not mean that these objects will not require resource checks by the RACS. For consistency, each such object will be assigned to the same protection domain, which is authorized for all of the resources. The identity of each such object will still undergo authentication, the same as for any other object.

If this were not the case, and some objects were not associated with any authorization information, a perpetrator could easily bypass the RACS by taking an object that is limited to a particular protection domain and simply stripping out its authorization information.

In order to determine the authorization of a particular running instance of an object, it is not enough to look at this object's protection domain. This is because a running object may invoke another object from a different protection domain. This calling sequence of objects has to be tracked in order to calculate the effective permissions of a running instance of an object.

In another embodiment, the use of a security thread is envisioned. The security thread is an execution thread that keeps track of the current authorization state in addition to the current execution state (*e.g.*, register values, local variables, *etc.*). Each security thread executes independently, just like other threads.

The authorization state of a security thread is a list of resources and allowable operations on those resources for which the thread is currently authorized. In general, an authorization state is a function of the protection domains of all of the objects that are in the current calling stack of the security thread. The way in which the authorization state is calculated will be described, *infra.*

As is the case with other threads, a security thread may spawn another security thread. The new thread will inherit the authorization state of the thread that spawned it. However, once the new thread starts executing its authorization state will be modified based on the objects that it invokes, independently from the authorization state of the original thread. When RACS is enabled, every single thread running in the host will be a security thread and will have an associated authorization state.

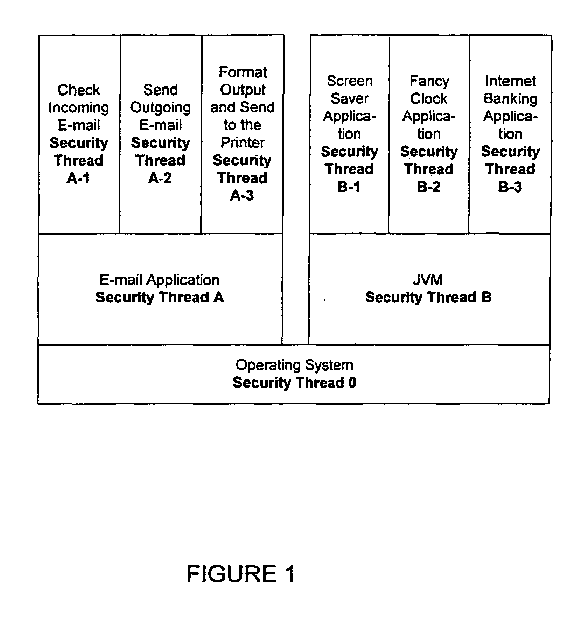

In a specific embodiment shown in Figure 1, an example is depicted of some of the various security threads that might be present in a running system. In this example, initially there is only the operating system running, associated with its own Security Thread 0.

Thread 0 later spawns an email application (Security Thread A) and a JVM (Security Thread B). Security Threads A and B will start out with a copy of the authorization state of the Security Thread 0. After Security Threads A and B are spawned, there are 3 independent Security Threads running (0, A and B), each having its own authorization state.

Later, the E-mail application spawns three additional threads. Check Incoming Mail (Security Thread A-1), Send Outgoing Mail (Security Thread A-2) and Format Output and Send to the Printer (Security Thread A-2). Threads A-1, A-2 and A-3 each start out with a copy of the authorization state of Thread A. There are now 6 independent Security Threads running (0, A, A-1, A-2, A-3 and B).

Finally, the JVM starts up three Java applications, each with its own Security Thread: Screen Saver (Security Thread B-1), Fancy Clock (Security Thread B-2) and Internet Banking (Security Thread B-3). (Here, we are using a generalized definition of a Java Application, which is a high level Java object that is started up directly by the JVM. Unlike the standard definition of an application -- an object that contains the function "main()" -- there can be multiple such applications controlled by the same instance of a JVM. A Java Applet is one example of such an application. The same instance of a JVM is capable of running multiple applets simultaneously.) Threads B-1, B-2 and B-3 start out with a copy of the authorization state of Thread B. There are now nine independent Security Threads running (0, A, A-1, A-2, A-3, B, B-1, B-2 and B-3).

When one object makes a call to another object that is in a different protection domain, the action is to intersect the current authorization state with the protection domain of the called object. This means that the called object cannot access a resource unless it is accessible by every object in the current call stack.

It is legitimate to have objects belonging to a protection domain that has rights to every single resource as mentioned earlier. When a call is made to such an object, the current authorization state remains the same. In fact, an object may be placed into this protection domain not because it should have rights to all the resources, but because it should inherit the current authorization state.

Simply intersecting protection domains may be insufficient in some cases. For example, various software objects may be authorized or not authorized to send output to a printer. However, they are only authorized to make certain API calls on a printer driver and should not be allowed to write directly to the printer port.

Thus, the protection domain of the printer driver object will be the only protection domain to include the rights to access the printer port. Under the intersection rule defined in the above section, when the printer driver is called its protection domain will be intersected with the current authorization state and it will lose the ability to access the printer port. Consequently, a new way of combining protection domains is needed here.

The RACS uses the privileged section, similar to the Java privileged section, to solve this problem. When a "Begin Privileged" construct is encountered inside the executing object, the current authorization state is modified again -- it is set to the union of the current authorization state and the protection domain of the executing object. When "End Privileged" is encountered, the authorization state reverts back to what it was previously.

Various implementations of the security threads are contemplated. In one embodiment, each security thread has an associated authorization stack, analogous to the calling stack, but maintained independently. Each entry on the authorization stack is the authorization state. At any point in time, the current authorization state of a security thread is the authorization state that is found on the top of its authorization stack.

In keeping with the invention, whenever a call is made to a different software object a new authorization state is pushed onto the top of the authorization stack. As specified earlier, the new authorization state is the intersection of the old authorization state with the protection domain of the called object. Once the execution of this new software object ends and control is transferred to the previous object, the current authorization state is popped off the stack.

Similarly, when a "Begin Privileged" construct is encountered, a new authorization state is pushed onto the top of the authorization stack. This time, the new authorization state is the union of the old authorization state with the protection domain of the current object. Once the privileged section ends (with an "End Privileged" construct), that authorization state is popped off the stack.

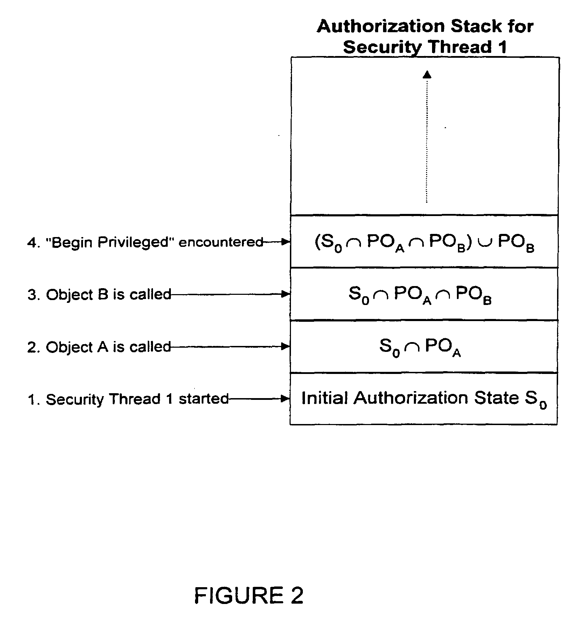

Referring now to Figure 2, an example of an authorization stack for Security Thread 1 is shown. Security Thread 1 is started by some other state and acquires an initial authorization state S₀ . The authorization state S₀ is a copy of the authorization state of the spawning thread.

Subsequently, object A is called and a new authorization state is pushed onto the stack. It is the intersection of the previous authorization state and the protection domain of object A (PO_{A}). Similarly, object B is called and the new authorization state is the intersection of the previous state and the protection domain of B (PO_{B}).

Finally, within object B a "Begin Privileged" construct is encountered causing a new authorization state to be established. The new authorization state is the union of the previous authorization state and PO_{B}.

In further keeping with the invention, each entry in the authorization stack is an authorization state that should include at least the following information: an object ID of the currently executing object; a security group ID (identifying a protection domain); a time stamp of when this authorization state was created (*i.e.*, pushed onto the stack); and a list of allowable resource operations (*e.g.*, open, close, read and write).

Authorization for a particular resource is checked at runtime. The most important place to perform a resource check is inside an "open" function for a particular object, representing a resource. The open call should include a "mode" that would restrict a returned resource handle to a particular set of operations. Thus, a check inside the "open" function would verify that the security thread is both allowed to access this resource and allowed to perform the specified operations.

Operations performed on the opened resource may also be verified by the RACS in order to further enhance the security. It is conceivable that a handle to a resource was obtained via illicit means (outside of the normal "open" call), which can be detected with a resource check during a subsequent operation on that handle. Since resource operations may be performed frequently, care must be taken in the implementation of these subsequent resource checks. It may be sufficient that the subsequent resource checks do the actual checking only once every few calls in order to improve performance.

If an illegal resource access is detected inside a resource check API, an appropriate action must be taken. In one embodiment, this resource check API is performed by a tamperproof security processor that will be responsible for taking appropriate action on an unauthorized access. The action taken may include any of the following or a combination thereof: returning an error code, denying the requested operation on that resource; writing out an unauthorized access message to a log; reporting the unauthorized access to a trusted authority; killing the offending security thread; and/or starting shutting down various services inside that host. To allow for the most flexibility, each protection domain may include flags that determine the action or actions taken when unauthorized access is detected.

Each resource check may involve communication with a security processor, which may introduce too much overhead. As mentioned in the previous section, performing the actual checking only once every few operations may reduce this overhead.

In an alternative embodiment, each resource access will not be checked immediately and will not be checked by the security thread that acquired the resource. Instead, each resource access will be shadow imaged, ideally in secure memory available to the security processor and will be reviewed by an independent thread running inside that security processor. If this thread detects an unauthorized access, it will then take some action that may be any of the following or a combination thereof: writing out an unauthorized access message to a log; reporting the unauthorized access to a trusted authority; killing the offending security thread; and/or starting shutting down various services inside that host. Each protection domain may include flags that determine the action or actions taken when unauthorized access is detected, as previously stated.

It may be desirable to dynamically change the resource permissions for various protection domains. For example, resource permissions may be modified based on the functionality that is purchased by the owner of the set-top box or some other platform. When a software object is called, the latest resource permissions associated with its protection domain will be used in calculating the authorization state of a security thread, thus making the RACS more dynamic than the standard Java security model.

Sometimes the permissions of an object that is currently executing are also modified. An object such as a JVM, for example, may be executing continuously for a prolonged period of time, and one may want the changes to take effect before it is restarted. Additional mechanisms need to be defined to handle this case.

Each entry in the authorization stack contains the security group ID, which references a particular protection domain. When resource permissions for one of the protection domains in the authorization stack are modified it is possible to update the stack by modifying each entry, starting with the one that corresponds to a modified protection domain and continuing up until the top of the stack is reached.

Unfortunately, this would not be enough to solve the problem. When a Security Thread A spawns a Security Thread A-1, the initial authorization state of A-1 is set to the authorization state of A at the time that A-1 is created. Let us say that at time T one of the protection domains in A's authorization stack is modified. We can adjust A's authorization stack, but the initial authorization state of A-1 may now be out-of-date.

There is no way to provide a link from A's authorization stack to the initial authorization state of A-1. That is because after A-1 is started, thread A can continue executing independently, and by time T A's authorization stack may be completely different, or perhaps A has terminated by then.

The present invention provides a solution to this problem. Let us say that Security Thread A creates A-1. Then, A-1's authorization stack is initialized to an exact copy of A's Authorization Stack. Subsequently, when a protection domain that happened to be in A's authorization stack at the time (of A-1's creation) is modified, it will also be found in A-1's authorization stack. This allows for all of A-1's authorization states in the stack to be updated properly.

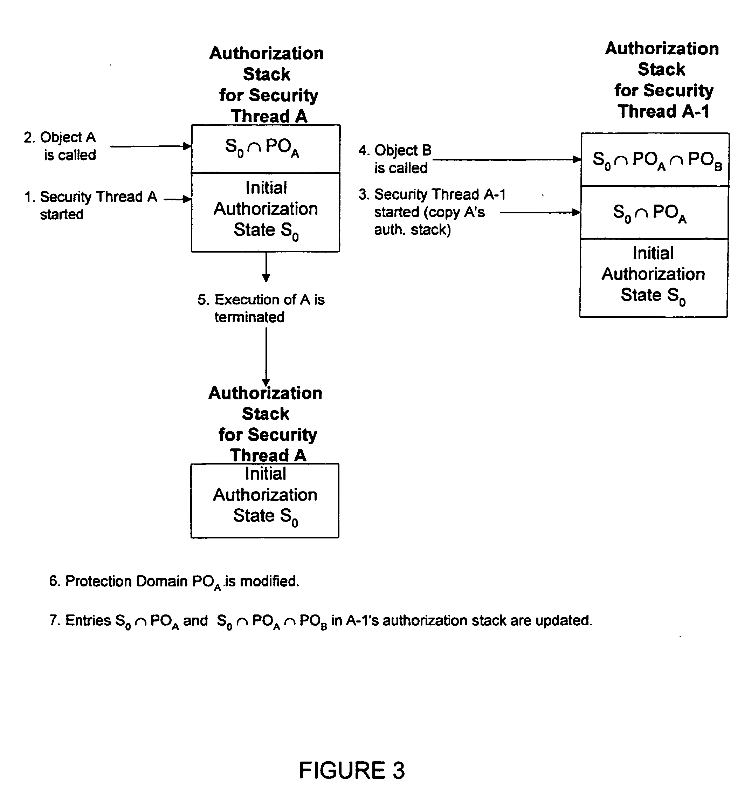

Turning to Figure 3, one can see how Security Thread A creates A-1. Initially, thread A is running object A, which means that entries affected by A's protection domain were found in both A's and A-1's authorization stack. Later (in step 5), thread A stops executing object A, and the corresponding entries in A's authorization stack are removed. However, since thread A-1 was created from the code inside object A, the corresponding entries remain in A-1's authorization stack. Later, object A's protection domain is modified. This no longer affects thread A's authorization stack, since it is not running object A. However, it does affect A-1's authorization stack which is updated accordingly.

In one embodiment, there is a separate execution thread called authorization stack refresh (ASR) thread, which will dynamically update the contents of authorization stacks when protection domains change. This does not guarantee immediate updates to authorization stacks, but will insure that they are updated within some reasonable amount of time. Whether or not this thread is started is optional, depending on whether or not the resource permissions need to be updated while a particular object is running.

In order to securely implement the RACS, the identity of each object must be authenticated both during the object download and during the object launch (start of execution). Object authentication can be implemented independently from the RACS and is outside of the scope of this discussion.

The resource permissions for a protection domain may change dynamically and must also be delivered securely. Resource permissions for each object may be signed with a private key of the authorization authority and should include a version number to avoid version rollback attacks. Alternatively, the authorization authority may deliver resource permissions via a secure message protocol, such as TLS or IPSEC. The details of the delivery of resource permissions are outside of the scope of this discussion.

Security of the RACS is further enhanced when all resource and authentication checks are encapsulated inside a tamperproof security processor. The design of the security processor is also outside of the scope of this discussion.

In conclusion, the present invention provides methods for controlling resource access in a digital processing device. While the above is a complete description of the preferred embodiment of the present invention, it is possible to use various alternatives, modifications and equivalents. Therefore, the scope of the present invention should be determined not with reference to the above description but should, instead, be determined with reference to the appended claims, along with their full scope of equivalents.

## Claims

1. A method of controlling resource access in a digital processing device, the method comprising:
allocating a protection domain including a first set of resources and permitted operations to a software object in the digital processing device; and
changing the allocation of resources and permitted operations to the software object during execution of the software object.

2. The method of claim 1, further comprising:
identifying a first set of resources and permitted operations in the digital processing device;
associating a protection domain with the first set of resources and permitted operations; and
allocating the first set of resources and permitted operations to a software object by associating the software object with the protection domain by using an ID value.

3. The method of claim 2, wherein a software object can be associated with one or more protection domains.

4. The method of claim 2, wherein the protection domain is static.

5. The method of claim 2, wherein the protection domain is dynamically updated with a new set of permitted operations.

6. The method of claim 2, wherein the software object is associated with a security group identification that associates the software object with the protection domain.

7. The method of claim 2, wherein each of at least one software object is associated with a single security group identification; and
each different security group identification associates the software object or objects associated therewith with a different protection domain.

8. The method of claim 7, further including:
running a security thread having an authorization state; and
calling software objects via the security thread, wherein the authorization state is modified based upon the software objects called via the security thread.

9. The method of daim 8, wherein when a first software object makes a call to a second software object, the authorization state is intersected with the protection domain of the second software object.

10. The method of claim 7, wherein all of the software objects that are associated with the same security group identification are authorized for an identical set of resources.

11. The method of claim 8, further including:
associating an authorization stack with a security thread, wherein the current authorization state of the security thread is the authorization state that is on the top of the authorization stack.

12. The method of claim 1, further comprising:
changing the allocation of resources to the software object to modify the functionality of the software object.

13. The method of claim 12, wherein the allocation of resources to the software object is changed while the software object is executing.

14. The method of claim 5, further comprising
updating the protection domain by sending a message using a secure online protocol.

15. The method of claim 8, wherein a plurality of security threads including multiple objects in multiple protection domains execute in a host, wherein the plurality of security threads are identified by different security group IDs, the method further comprising:
receiving a message at the host to change allowable resource operations for a given protection domain; and
updating the authorization state of security threads in response to the changed allowable resource operations for the given protection domain.

16. The method of daim 8, wherein a first object in a first protection domain makes a call to a second object in a second protection domain, the method further comprising
intersecting the authorization state with the second protection domain to determine allowable resource operations for the second object.

17. The method of claim 8, wherein a first object in a first protection domain makes a call to a second object in a second protection domain, the method further comprising
determining a union of first and second protection domains to determine allowable resource operations for the second object.

18. The method of claim 8, wherein a parent thread spawns a new thread and the new thread inherits the authorization state of the parent thread.

## Patentansprüche

1. Ein Verfahren zur Steuerung des Betriebsmittelzugriffs in einer digitalen Verarbeitungsvorrichtung, wobei das Verfahren Folgendes umfasst:
einen Kompetenzbereich einschließlich eines ersten Satzes von Betriebsmitteln und zulässigen Abläufen einem Softwareobjekt in der digitalen Verarbeitungsvorrichtung zuordnen; und
die Zuordnung von Betriebsmitteln und zulässigen Abläufen zu dem Softwareobjekt während der Ausführung des Softwareobjekts ändern.

2. Verfahren gemäß Anspruch 1, das ferner Folgendes umfasst:
einen ersten Satz von Betriebsmitteln und zulässigen Abläufen in der digitalen Verarbeitungsvorrichtung identifizieren;
einen Kompetenzbereich mit dem ersten Satz von Betriebsmitteln und zulässigen Abläufen verknüpfen; und
den ersten Satz von Betriebsmitteln und zulässigen Abläufen einem Softwareobjekt zuordnen, indem das Softwareobjekt unter Verwendung eines Kennungswertes mit dem Kompetenzbereich verknüpft wird.

3. Verfahren gemäß Anspruch 2, wobei ein Softwareobjekt mit einem oder mehreren Kompetenzbereichen verknüpft werden kann.

4. Verfahren gemäß Anspruch 2, wobei der Kompetenzbereich statisch ist.

5. Verfahren gemäß Anspruch 2, wobei der Kompetenzbereich mit einem neuen Satz von zulässigen Abläufen dynamisch aktualisiert wird.

6. Verfahren gemäß Anspruch 2, wobei ein Softwareobjekt mit einer Sicherheitsgruppenkennung verknüpft ist, welche das Softwareobjekt mit dem Kompetenzbereich verknüpft.

7. Verfahren gemäß Anspruch 2, wobei jedes mindestens eines Softwareobjekts mit einer einzelnen Sicherheitsgruppenkennung verknüpft ist; und
jede unterschiedliche Sicherheitsgruppenkennung das Softwareobjekt oder damit verknüpfte Objekte mit einem unterschiedlichen Kompetenzbereich verknüpft.

8. Verfahren gemäß Anspruch 7, das ferner Folgendes einschließt:
einen Sicherheitsfaden mit einem Berechtigungszustand laufen lassen; und
Softwareobjekte über den Sicherheitsfaden anrufen, wobei der Berechtigungszustand basierend auf die über den Sicherheitsfaden angerufenen Softwareobjekte modifiziert wird.

9. Verfahren gemäß Anspruch 8, wobei sich der Berechtigungszustand, wenn ein erstes Softwareobjekt ein zweites Softwareobjekt anruft, mit dem Kompetenzbereich des zweiten Softwareobjekts kreuzt.

10. Verfahren gemäß Anspruch 7, wobei alle der Softwareobjekte, die mit derselben Sicherheitsgruppenkennung verknüpft sind, für einen identischen Satz an Betriebsmitteln berechtigt sind.

11. Verfahren gemäß Anspruch 8, das ferner Folgendes einschließt:
einen Berechtigungs-Stapelspeicher mit einem Sicherheitsfaden verknüpfen, wobei der gegenwärtige Berechtigungszustand des Sicherheitsfadens der Berechtigungszustand ist, der sich in dem obersten Teil des Berechtigungs-Stapelspeichers befindet.

12. Verfahren gemäß Anspruch 1, das ferner Folgendes umfasst:
die Zuordnung von Betriebsmitteln zu dem Softwareobjekt ändern, um die Funktionalität des Softwareobjekts zu modifizieren.

13. Verfahren gemäß Anspruch 12, wobei die Zuordnung von Betriebsmitteln zu dem Softwareobjekt geändert wird, während das Softwareobjekt ausführt.

14. Verfahren gemäß Anspruch 5, das ferner Folgendes umfasst:
den Kompetenzbereich aktualisieren, indem unter Verwendung eines sicheren Onlineprotokolls eine Nachricht gesendet wird.

15. Verfahren gemäß Anspruch 8, wobei eine Vielzahl von Sicherheitsfäden einschließlich mehrerer Objekte in mehreren Kompetenzbereichen in einem Host ausführen, wobei die Vielzahl von Sicherheitsfäden durch unterschiedliche Sicherheitsgruppenkennungen identifiziert werden, wobei das Verfahren ferner Folgendes umfasst:
an dem Host eine Nachricht empfangen, um erlaubte Betriebsmittelabläufe für einen gegebenen Kompetenzbereich zu ändern; und
den Berechtigungszustand von Sicherheitsfäden als Antwort auf die geänderten erlaubten Betriebsabläufe für den gegebenen Kompetenzbereich aktualisieren.

16. Verfahren gemäß Anspruch 8, wobei ein erstes Objekt in einem ersten Kompetenzbereich ein zweites Objekt in einem zweiten Kompetenzbereich anruft, wobei das Verfahren ferner Folgendes umfasst:
den Berechtigungszustand mit dem zweiten Kompetenzbereich kreuzen, um erlaubte Betriebsabläufe für das zweite Objekt zu bestimmen.

17. Verfahren gemäß Anspruch 8, wobei ein erstes Objekt in einem ersten Kompetenzbereich ein zweites Objekt in einem zweiten Kompetenzbereich anruft, wobei das Verfahren ferner Folgendes umfasst:
eine Vereinigung des ersten und zweiten Kompetenzbereichs bestimmen, um erlaubte Betriebsabläufe für das zweite Objekt zu bestimmen.

18. Verfahren gemäß Anspruch 8, wobei ein Stammfaden einen neuen Faden hervorbringt und der neue Faden den Berechtigungszustand des Stammfadens übernimmt.

## Revendications

1. Un procédé pour contrôler l'accès à des ressources dans un dispositif de traitement numérique, le procédé comportant :
allouer un domaine de protection comprenant un premier jeu de ressources et d'opérations permises à un objet logiciel dans le dispositif de traitement numérique ; et
changer l'allocation de ressources et d'opérations permises à l'objet logiciel durant l'exécution de l'objet logiciel.

2. Le procédé de la revendication 1, comportant de plus:
identifier un premier jeu de ressources et d'opérations permises dans le dispositif de traitement numérique ;
associer un domaine de protection au premier jeu de ressources et d'opérations permises ; et
allouer le premier jeu de ressources et d'opérations permises à un objet logiciel en associant l'objet logiciel au domaine de protection en utilisant une valeur ID.

3. Le procédé de la revendication 2 dans lequel un objet logiciel peut être associé à un ou plusieurs domaines de protection.

4. Le procédé de la revendication 2, dans lequel le domaine de protection est statique.

5. Le procédé de la revendication 2, dans lequel le domaine de protection est dynamiquement mis à jour avec un nouveau jeu d'opérations permises.

6. Le procédé de la revendication 2, dans lequel l'objet logiciel est associé à une identification de groupe sécurité qui associe l'objet logiciel au domaine de protection.

7. Le procédé de la revendication 2, dans lequel chaque au moins un objet logiciel est associé à une identification de groupe sécurité unique ; et
chaque identification de groupe sécurité différente associe l'objet ou les objets logiciels associés à celui-ci à un domaine de protection différent.

8. Le procédé de la revendication 7, comprenant de plus :
faire passer un fil de sécurité ayant un état d'autorisation ; et
appeler des objets logiciels par le biais du fil de sécurité, dans lequel l'état d'autorisation est modifié sur la base des objets logiciels appelés par le biais du fil de sécurité.

9. Le procédé de la revendication 8, dans lequel lorsqu'un premier objet logiciel lance un appel à un deuxième objet logiciel, l'état d'autorisation est intersecté par le domaine de protection du deuxième objet logiciel.

10. Le procédé de la revendication 7, dans lequel tous les objets logiciels qui sont associés à la même identification de groupe sécurité sont autorisés pour un jeu identique de ressources.

11. Le procédé de la revendication 8, comprenant de plus :
associer une pile autorisation à un fil de sécurité, dans lequel l'état d'autorisation courant du fil de sécurité est l'état d'autorisation qui est sur le dessus de la pile autorisation.

12. Le procédé de la revendication 1, comportant de plus :
changer l'allocation de ressources à l'objet logiciel pour modifier la fonctionnalité de l'objet logiciel.

13. Le procédé de la revendication 12, dans lequel l'allocation de ressources à l'objet logiciel est changée alors que l'objet logiciel est en cours d'exécution.

14. Le procédé de la revendication 5, comportant de plus :
mettre à jour le domaine de protection en envoyant un message utilisant un protocole en ligne sécurisé.

15. Le procédé de la revendication 8, dans lequel une pluralité de fils de sécurité comprenant des objets multiples dans des domaines de protection multiples exécutent dans un hôte, dans lequel la pluralité de fils de sécurité sont identifiés par différentes ID de groupe sécurité, le procédé comportant de plus :
recevoir un message chez l'hôte pour changer des opérations de ressources admissibles pour un domaine de protection donné ; et
mettre à jour l'état d'autorisation de fils de sécurité en réponse aux opérations de ressources admissibles changées pour le domaine
de protection donné.

16. Le procédé de la revendication 8, dans lequel un premier objet dans un premier domaine de protection lance un appel à un deuxième objet dans un deuxième domaine de protection, le procédé comportant de plus
faire intersecter l'état d'autorisation par le deuxième domaine de protection pour déterminer des opérations de ressources admissibles pour le deuxième objet.

17. Le procédé de la revendication 8, dans lequel un premier objet dans un premier domaine de protection lance un appel à un deuxième objet dans un deuxième domaine de protection, le procédé comportant de plus
déterminer une union des premier et deuxième domaines de protection pour déterminer des opérations de ressources admissibles pour le deuxième objet.

18. Le procédé de la revendication 8, dans lequel un fil parent génère un nouveau fil et le nouveau fil hérite de l'état d'autorisation du fil parent.
